# EUROPEAN PATENT APPLICATION

(11) **EP 3 040 272 A1**
(43) Date of publication of application: **06.07.2016**
(21) Application number: 16150202.6
(22) Date of filing: 05.01.2016
(51) Int. Cl.: B64D 9/00, B60P 7/08, B60P 7/13

(54) **CONFORMAL MANUALLY OPERATED AIRCRAFT CARGO RESTRAINT MECHANISM WITH INTEGRATED TIE OFF**

(30) Priority: 05.01.2015 US 201514589770
(71) Applicant: Goodrich Corporation, Charlotte, NC 28217-4578 (US)
(72) Inventor: HIMMELMANN, Richard A., Beloit, WI Wisconsin 53511 (US)
(74) Representative: Hughes, Andrea Michelle

(57) **Abstract**

Disclosed herein is a cargo restraint for restraining cargo 108 from motion relative to a floor panel 112, according to various embodiments. The cargo restraint includes a longitudinal restraint rod 302 having an upper end and a lower end. The cargo restraint also includes a vertical restraint surface 300 coupled to the upper end of the longitudinal restraint rod. The vertical restraint surface is configured to be positioned at least one of adjacent, flush with or below the floor panel while the cargo restraint is in a stowed position and above the floor panel while the cargo restraint is in a deployed position.

## Description

### Field

The present disclosure relates generally to cargo management systems.

### Background

Conventional aircraft cargo systems typically include various tracks and rollers that span the length of an aircraft. Power drive units ("PDUs") convey cargo forward and aft along the aircraft on conveyance rollers which are attached to the aircraft floor structure. Cargo may be loaded from an aft position on an aircraft and conducted by the cargo system to a forward position and/or, depending upon aircraft configuration, cargo may be loaded from a forward position on an aircraft and conducted by the cargo system to an aft position. Conventional systems are typically designed to accommodate a particular pallet size. Conventional systems are typically comprised of numerous components that may be time consuming to install, replace and maintain.

### Summary

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

Disclosed herein is a cargo restraint for restraining cargo from motion relative to a floor panel, according to various embodiments. The cargo restraint includes a longitudinal restraint rod having an upper end and a lower end. The cargo restraint also includes a vertical restraint surface coupled to the upper end of the longitudinal restraint rod. The vertical restraint surface is configured to be positioned at least one of adjacent, flush with or below the floor panel while the cargo restraint is in a stowed position and above the floor panel while the cargo restraint is in a deployed position.

Also disclosed herein is a system for restraining cargo from motion relative to a floor panel, according to various embodiments. The system includes a support structure configured to support the cargo. The system also includes a cargo restraint coupled to the support structure. The cargo restraint includes a longitudinal restraint rod having an upper end and a lower end. The cargo restraint also includes a vertical restraint surface coupled to the upper end of the longitudinal restraint rod. The vertical restraint surface is configured to be positioned at least one of adjacent, flush with or below the floor panel while the cargo restraint is in a stowed position and above the floor panel while the cargo restraint is in a deployed position.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates an aircraft cargo system, in accordance with various embodiments;
FIG. 2 illustrates a portion of a cargo system including a plurality of cargo restraints in deployed and stowed positions, in accordance with various embodiments;
FIG. 3 illustrates a portion of a cargo system, in accordance with various embodiments;
FIG. 4 illustrates a portion of a cargo system including a release lever for deploying and/or stowing a cargo restraint, in accordance with various embodiments;
FIG. 5 illustrates a portion of a cargo system with a floor panel and a support structure being transparent, in accordance with various embodiments;
FIG. 6 illustrates the portion of the cargo system illustrated in FIG. 5 with a cargo restraint in a deployed position, in accordance with various embodiments;
FIG. 7 illustrates a portion of a cargo system showing a deployment guide and a deployment guide pin, in accordance with various embodiments;
FIG. 8 illustrates a portion of a cargo system, in accordance with various embodiments; and
FIG. 9 illustrates a cargo restraint, in accordance with various embodiments. **Detailed Description**

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the invention as defined by the claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option.

As used herein, "aft" refers to the direction associated with the tail of an aircraft, or generally, to the direction of exhaust of the gas turbine engine. As used herein, "forward" refers to the direction associated with the nose of an aircraft, or generally, to the direction of flight or motion.

Aircraft cargo management systems as disclosed herein allow cargo to be loaded into an aircraft and positioned within the aircraft in a simple, elegant manner. In that regard, aircraft cargo management systems as disclosed herein may reduce part count and associated replacement/wear costs over time.

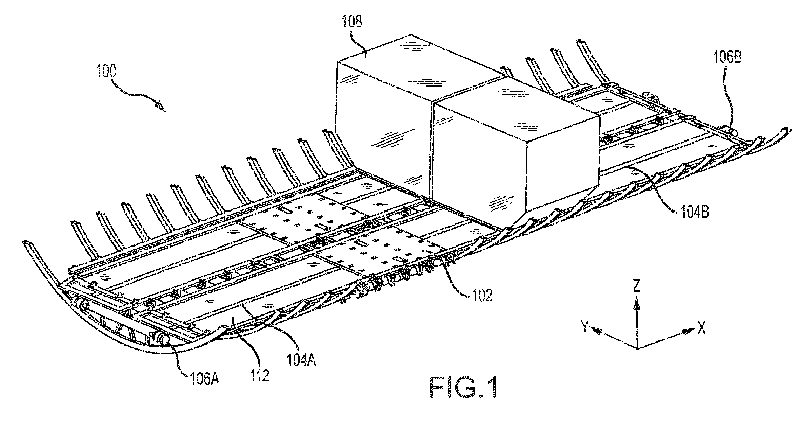

With reference to FIG. 1, an aircraft cargo system 100 is illustrated. Throughout the FIGs., X-Y-Z axes are shown for ease of illustration. Cargo system 100 includes an aft shuttle drive unit 106A coupled to an aft propulsion belt 104A. Aft propulsion belt 104A is coupled to an air cushion cargo shuttle 102. Cargo system 100 also includes a forward shuttle drive unit 106B coupled to a forward propulsion belt 104B. Forward propulsion belt 104B is also coupled to air cushion cargo shuttle 102. Cargo system 100 also includes a floor panel 112.

Air cushion cargo shuttle 102 may include a controller and air blowers. The air blowers may be configured to direct a fluid, such as air, into a volume beneath air cushion cargo shuttle 102. The directed air may result in relatively high pressure (e.g., an air pressure higher than ambient air pressure) in the volume beneath air cushion cargo shuttle 102. This air pressure may cause air cushion cargo shuttle 102 to lift above floor panel 112 (i.e., displace air cushion cargo shuttle 102 in the positive Z direction). Accordingly, it may be desirable for floor panel 112 to be relatively flat so air within the volume below air cushion cargo shuttle 102 is not released into the atmosphere. The controller may control an amount of air displaced via air blowers in order to alter the pressure beneath air cushion cargo shuttle 102, changing the distance that air cushion cargo shuttle 102 is lifted above floor panel 112, or allowing air cushion cargo shuttle to lift cargo 108.

Air cushion cargo shuttle 102 may be coupled to aft propulsion belt 104A and/or forward propulsion belt 104B. Tension may be applied to aft propulsion belt 104A and/or forward propulsion belt 104B. In response to sufficient tension applied to either propulsion belt, air cushion cargo shuttle 102 may be displaced forward and/or aft.

The propulsion belts may be wound around a portion of aft shuttle drive unit 106A or forward shuttle drive unit 106B. In that regard, a shuttle drive unit may comprise a cylindrical structure (e.g., a bobbin) to which a shuttle belt is affixed. The shuttle drive unit comprises a motive device, such as an electric motor, to rotate the bobbin in a desired direction. The shuttle drive unit may also disengage the electric motor or be otherwise geared in such a manner so that free rotation of the bobbin is allowed. Thus, as forward shuttle drive unit 106B may be rotating its bobbin to pull forward propulsion belt 104B forward, aft shuttle drive unit 106A may allow its bobbin to freely rotate in response to the force exerted by forward propulsion belt 104B through air cushion cargo shuttle 102. In like manner, as aft shuttle drive unit 106A may be rotating its bobbin to pull aft propulsion belt 104A aft, forward shuttle drive unit 106B may allow its bobbin to rotate in response to a predetermined level of tension exerted by aft propulsion belt 104A through air cushion cargo shuttle 102.

In order to reposition cargo 108 within cargo system 100, the air blowers of air cushion cargo shuttle 102 may displace a first amount of air, causing air cushion cargo shuttle 102 to lift above floor panel 112. In various embodiments, air cushion cargo shuttle 102 is not lifted above floor panel 112 prior to being positioned beneath cargo 108. While air cushion cargo shuttle 102 is being lifted by air blowers, forward shuttle drive unit 106B may become engaged and exert pressure on air cushion cargo shuttle 102 via tension applied to forward propulsion belt 104B. Air cushion cargo shuttle 102 may then be displaced forward such that it is positioned beneath cargo 108. In response to air cushion cargo shuttle 102 becoming positioned beneath cargo 108, force applied by forward shuttle drive unit 106B may be reduced and/or force may be applied via aft shuttle drive unit 106A causing air cushion cargo shuttle 102 to remain positioned beneath cargo 108.

While air cushion cargo shuttle 102 is positioned beneath cargo 108, the controller of air cushion cargo shuttle 102 may instruct the air blowers to increase the displacement of air beneath air cushion cargo shuttle 102, causing air cushion cargo shuttle 102 to be displaced further from floor panel 112, thus lifting cargo 108. When cargo 108 is lifted above floor panel 112, air cushion cargo shuttle 102 may be moved forward and/or aft based on tension applied to aft propulsion belt 104A and/or forward propulsion belt 104B without friction forces restricting the movement of air cushion cargo shuttle 102.

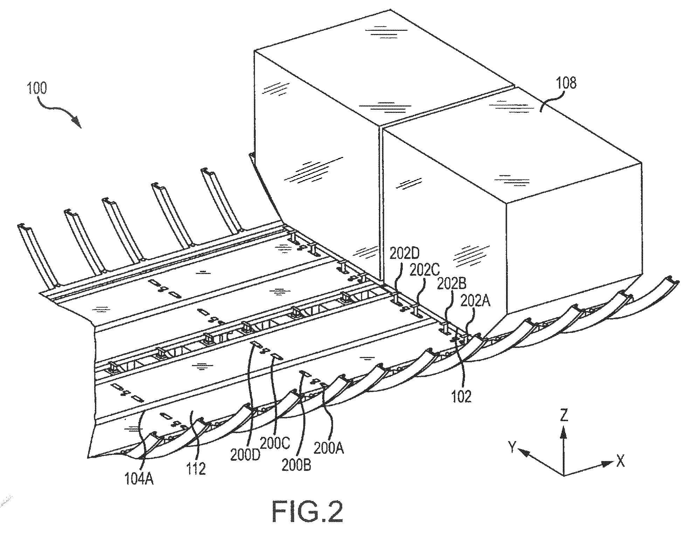

While an aircraft is in motion, forces may be applied to cargo 108 from, for example, changes in acceleration in any direction. In order to prevent damage to cargo 108 caused by these forces, it is desirable to be able to restrain cargo 108 to floor panel 112. FIG. 2 illustrates a portion of cargo system 100 including a plurality of cargo restraints in deployed and stowed positions. Cargo restraints allow cargo system 100 to restrain cargo.

In FIG. 2, cargo restraints 202 are illustrated in a deployed position and cargo restraints 200 are illustrated in a stowed position. With reference to FIGs. 1 and 2, when cargo restraints 200 are in a stowed position, air cushion cargo shuttle 102 may move forward or aft over cargo restraints 200 without being restrained by cargo restraints 200 or allowing a significant amount of air to escape the volume beneath air cushion cargo shuttle 102. While cargo restraints 200 are stowed, air cushion cargo shuttle 102 may transport cargo 108 over cargo restraints 200 to a desired location on floor panel 112. When cargo 108 is in the desired location, the air blowers of air cushion cargo shuttle 102 may decrease such that air cushion cargo shuttle 102 and cargo 108 move towards floor panel 112 (i.e., in the negative Z direction). In response to air cushion cargo shuttle 102 reaching a predetermined distance from floor panel 112, cargo 108 may contact and rest on floor panel 112 or on support beams of cargo system 100. While cargo 108 is in a resting position, air cushion cargo shuttle 102 may be moved forward or aft away from cargo 108. Cargo restraints 202 may then be deployed in order to restrain cargo 108.

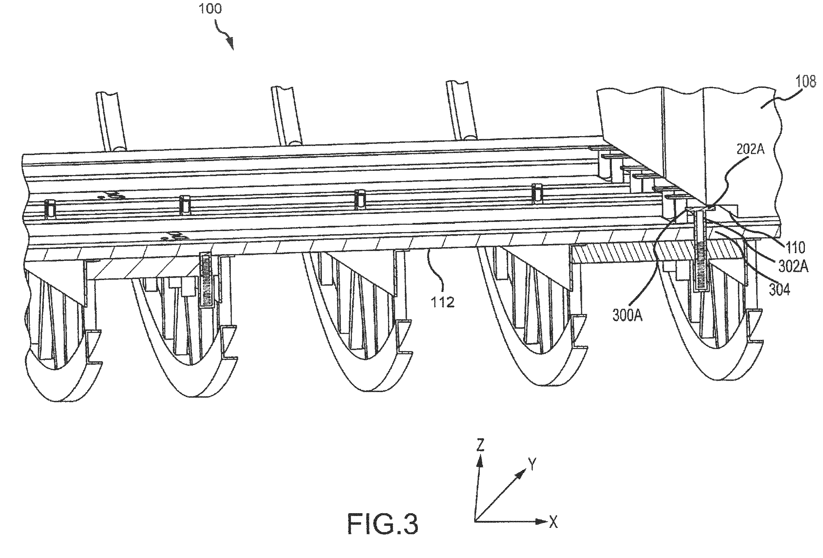

FIG. 3 illustrates a portion of cargo system 100 as viewed along the Y axis. As shown, cargo system 100 includes support structure 304, which may include support beams. Support structure 304 may be positioned below floor panel 112 (i.e., in the negative Z direction from floor panel 112), above floor panel 112 or on the same plane as floor panel 112. Support structure may be designed to support the weight of cargo 108 (i.e., resist forces applied by cargo 108).

Cargo restraint 202A may include a vertical restraint surface 300A and a longitudinal restraint rod 302A. While cargo restraint 202A is stowed, longitudinal restraint rod 302A may be positioned below or on the same plane as floor panel 112 and vertical restraint surface 300A may be substantially positioned on the same plane as floor panel 112 such that cargo restraint 202A will not interfere with movement of air cushion cargo shuttle 102 or cause significant leakage of air from volume beneath air cushion cargo shuttle.

While cargo restraint 202A is in the deployed state, vertical restraint surface 300A may extend in the forward and aft directions (i.e., the negative X and the positive X directions) from longitudinal restraint rod 302A. In various embodiments, vertical restraint surface 300A may extend only in the forward direction or only in the aft direction from longitudinal restraint rod 302A.

In various embodiments, cargo 108 may include a notch 110. In various embodiments, cargo is supported by a cargo pallet that includes a notch. Vertical restraint surface 300A may be adapted to be received by notch 110 of cargo 108. In response to cargo restraint 202A being deployed and vertical restraint surface 300A being received by notch 110, cargo restraint 202A may restrict the motion of cargo 108, such as restraining cargo from motion in the aft (negative X) direction and the vertical (positive Z) direction.

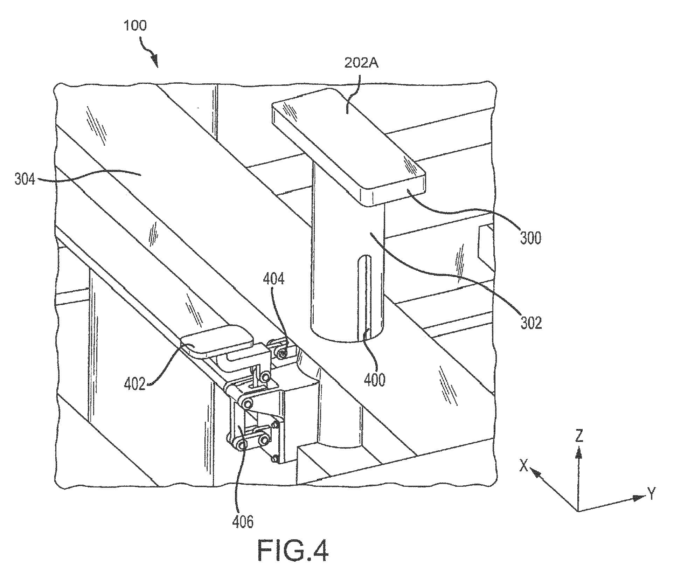

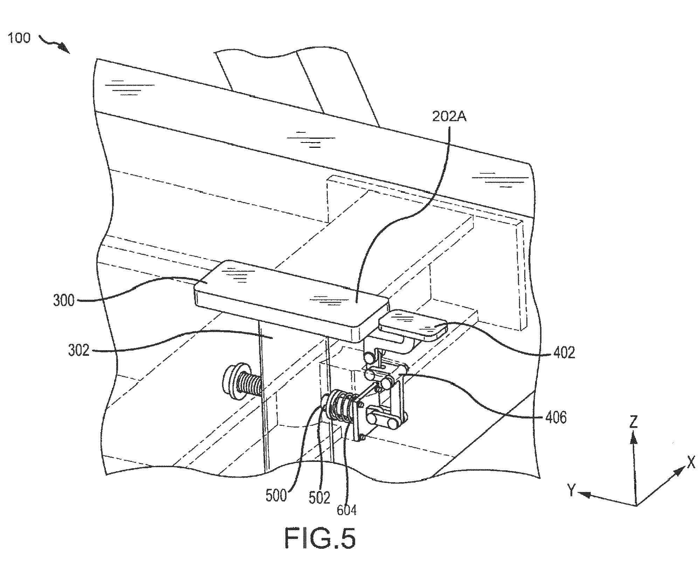

FIG. 4 illustrates a portion of cargo system 100 including a release lever 402 for deploying and/or stowing cargo restraint 202A and FIG. 5 illustrates a portion of cargo system 100 with floor panel 112 and support structure 304 being transparent. With reference to FIGs. 4 and 5, in order to deploy cargo restraint 202A from the stowed position, pressure may be applied to release lever 402, for example, in the negative Z direction. Release lever 402 is coupled to a release lever pivot 404, which is coupled to release lever linkage 406. Release lever linkage 406 may be coupled to a latch pin 502, which may be adapted to be received by a first latch socket 500. While stowed, latch pin 502 may be received by first latch socket 500. When latch pin 502 is within first latch socket 500, cargo restraint 202A may be restrained from motion.

In response to pressure being applied to release lever 402, release lever pivot 404 may apply pressure to release lever linkage 406, engaging release lever linkage 406. In turn, release lever linkage 406 may cause latch pin 502 to become removed from first latch socket 500, allowing motion of cargo restraint 202A in the positive Z direction.

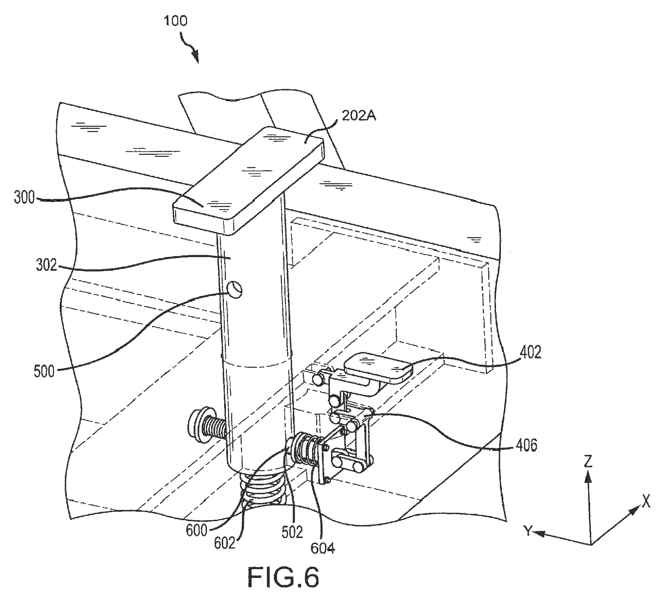

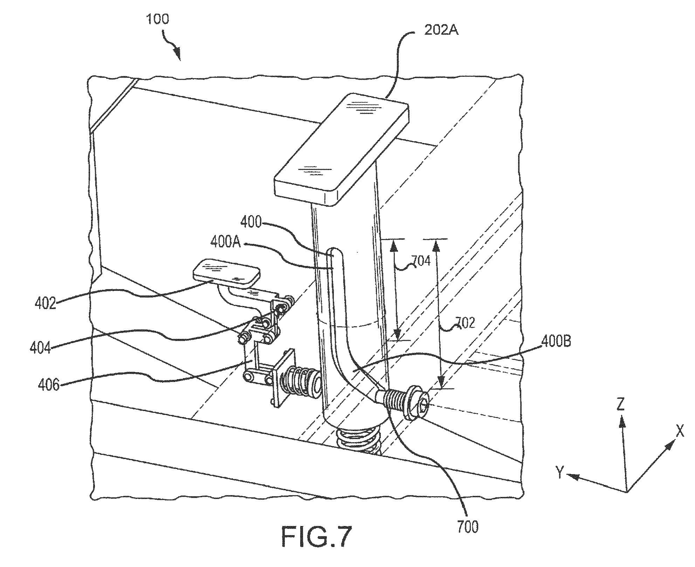

FIG. 6 illustrates the same portion of cargo system 100 illustrated in FIG. 5 with cargo restraint 202A in a deployed position. As illustrated, cargo restraint 202A has rotated 90° about the Z axis. This rotation will be described with reference to FIG. 7.

As shown in FIG. 6, a deployment spring 602 is positioned below cargo restraint 202A. With reference to FIGs. 5 and 6, deployment spring 602 exerts a force on cargo restraint 202A in the Z direction. This force causes cargo restraint 202A to move in the positive Z direction in response to latch pin 502 being removed from first latch socket 500.

As illustrated, longitudinal restraint rod 302 includes a second latch socket 600. In response to cargo restraint 202A being displaced a predetermined amount in the Z direction from its stowed position, latch pin 502 may align with second latch socket 600. A latch spring 604 coupled to latch pin 502 may exert a force on latch pin 502 in the Y direction, causing latch pin 502 to be received by second latch socket 600. In response to latch pin 502 is being inserted into second latch socket 600, cargo restraint 202A may be restrained to its deployed position, such that its movement in all directions is restrained.

In order to stow cargo restraint 202A, force may be applied to vertical restraint surface 300 in the negative Z direction. At the same time this force is applied, force may be applied to release lever 402 to actuate release lever 402. In response to this actuation, release lever linkage 406 may cause latch pin 502 to become removed from second latch socket 600. This in turn allows cargo restraint 202A to move in the negative Z direction in response to the force applied to vertical restraint surface 300. When cargo restraint 202A has returned to the stowed position, pressure may be removed from release lever 402 such that latch spring 604 causes latch pin 502 to be received by first latch socket 500. In response to latch pin 502 being received by first latch socket 500, cargo restraint 202A may be in the stowed position, such that it is restrained from motion.

With brief reference back to FIG. 2, each of the cargo restraints 202 may include a release lever such as release lever 402. In various embodiments, cargo restraints 202 may be stowed and deployed with the use of a single release lever.

FIG. 7 illustrates a portion of cargo system 100 showing a deployment guide 400 and a deployment guide pin 700. As illustrated, deployment guide 400 includes a straight portion 400A and a twist portion 400B. Deployment guide pin 700 may be coupled to support structure 304 of FIG. 4 such that movement of deployment guide pin 700 is restrained. While cargo restraint 202A is in a stowed position, deployment guide pin 700 may be received by straight portion 400A. In response to pressure being applied to release lever 402 such that latch pin 502 is released, allowing cargo restraint 202A to move, deployment guide pin 700 may continue to be received by deployment guide 400.

As cargo restraint 202A is displaced in the Z direction, deployment guide pin 700 may prevent cargo restraint 202A from rotating about the Z axis in response to deployment guide pin 700 being received by straight portion 400A. In response to deployment guide pin 700 being received by twist portion 400B, deployment guide pin 700 may cause cargo restraint 202A to rotate about the Z axis as cargo restraint 202A is further displaced in the Z direction. Because deployment guide pin 700 is coupled to support structure 304, its position relative to floor panel 112 does not change. Because deployment guide 400 includes twist portion 400B, cargo restraint 202A may rotate about the Z axis an amount defined by twist portion 400B.

Straight portion 400A may have a distance 704 in the Z direction. Deployment guide 400 may have a distance 702 in the Z direction. In various embodiments, distance 704 may be about 75% of the distance 702, such as between 70% and 80% of the distance 702, 60 and 90% of the distance 702, or the like.

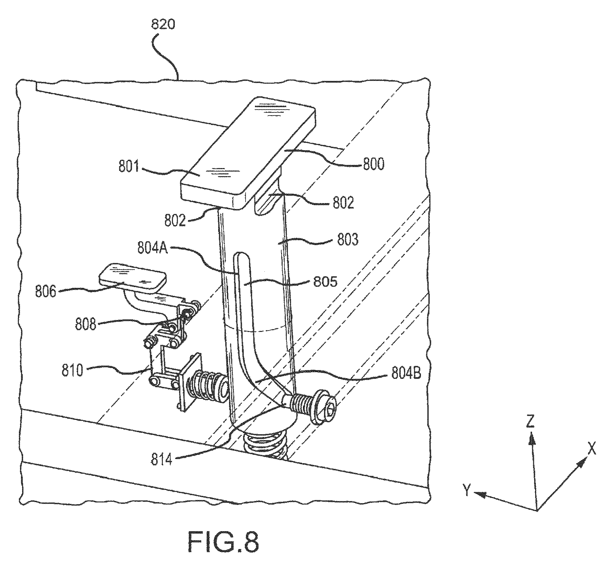

FIG. 8 illustrates a portion of a cargo system 820. Cargo system 820 may include a cargo restraint 800 that is similar to cargo restraint 202A of FIG. 2. Cargo restraint 800 may include a vertical restraint surface 801, a longitudinal restraint rod 803, a deployment guide 805 having a twist portion 804B and a straight portion 804A, a deployment guide pin 814, a release lever 806 coupled to a release lever pivot 808 and a release lever linkage 810. Cargo restraint 800 may differ from cargo restraint 202A in that cargo restraint 800 includes a tie off clevis 802. Otherwise, cargo restraint 800 may operate in the same fashion as cargo restraint 202A.

Tie off clevis 802 and cargo restraint 800 may be manufactured using additive manufacturing, etching, casting, forging or any other method of manufacturing. Tie off clevis 802 may allow cargo to be restrained using belts, cables or the like. With reference to FIGs. 1 and 8, when cargo is in a position on floor panel 112, additional restraint of cargo may be desirable in addition to vertical restraint surface 801. In various embodiments, operators may wish to use ropes or the like to restrain cargo. Tie off clevis 802 provides a location for a hook, piece of rope, etc. to be attached to cargo restraint 800, allowing additional restraint of cargo.

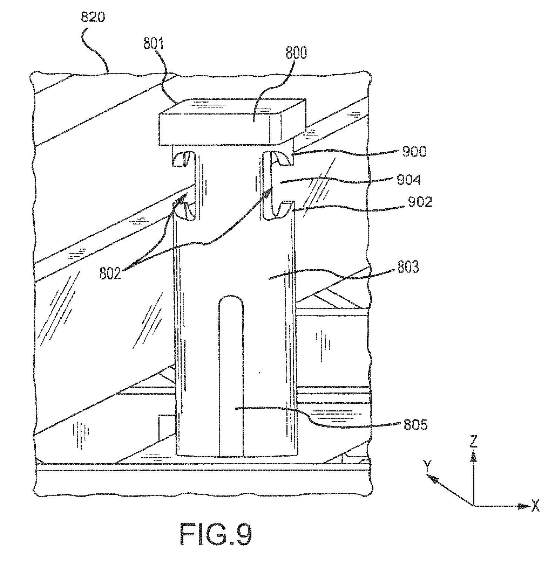

FIG. 9 illustrates another view of cargo restraint 800 as viewed along the Y axis. As illustrated, tie off clevis 802 is defined by longitudinal restraint rod 803. Tie off clevis 802 includes an upper protrusion 900 and a lower protrusion 902 that define an area. Area 904 may receive a cargo hook. Upper protrusion 900 and lower protrusion 902 may restrict motion of the cargo hook such that the cargo hook remains substantially in the same position relative to tie off clevis 802.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A cargo restraint for restraining cargo from motion relative to a floor panel, the cargo restraint comprising:
a longitudinal restraint rod (302) having an upper end and a lower end; and
a vertical restraint surface (300) coupled to the upper end of the longitudinal restraint rod and configured to be positioned at least one of adjacent, flush with or below the floor panel (112) while the cargo restraint is in a stowed position and above the floor panel while the cargo restraint is in a deployed position.

2. The cargo restraint of claim 1, further comprising a first latch socket (500) configured to receive a latch pin (502) such that in response to the first latch socket receiving the latch pin, the cargo restraint is held in the stowed position.

3. The cargo restraint of claim 2, further comprising a second latch socket (600) configured to receive the latch pin such that in response to the second latch socket receiving the latch pin, the cargo restraint is held in the deployed position.

4. The cargo restraint of claim 1, 2 or 3, further comprising a deployment guide (400) configured to receive a deployment guide pin (700), the deployment guide having an angle about a longitudinal axis of the longitudinal restraint rod such that in response to the cargo restraint changing positions from the deployed position to the stowed position, the cargo restraint rotates about the longitudinal axis an amount of the angle based on the deployment guide and the deployment guide pin.

5. The cargo restraint of any preceding claim, further comprising a tie off clevis (802) positioned proximate to the upper end of the longitudinal restraint rod.

6. The cargo restraint of any preceding claim, wherein the vertical restraint surface is configured to be received by a notch of the cargo.

7. A system for restraining cargo from motion relative to a floor panel, the system comprising:
a support structure (304) configured to support the cargo (108); and
a cargo restraint coupled to the support structure and including:
a longitudinal restraint rod (302) having an upper end and a lower end; and
a vertical restraint surface (300) coupled to the upper end of the longitudinal restraint rod and configured to be positioned at least one of adjacent, flush with or below the floor panel while the cargo restraint is in a stowed position and above the floor panel while the cargo restraint is in a deployed position.

8. The system of claim 7, further comprising a latch pin (502) coupled to the support structure, wherein the cargo restraint further includes a first latch socket (500) configured to receive the latch pin such that in response to the first latch socket receiving the latch pin, the cargo restraint is held in the stowed position.

9. The system of claim 8, wherein the cargo restraint further includes a second latch socket (600) configured to receive the latch pin such that in response to the second latch socket receiving the latch pin, the cargo restraint is held in the stowed position.

10. The system of claim 9, further comprising a release lever (402) coupled to the latch pin and configured to remove the latch pin from at least one of the first latch socket or the second latch socket in response to the release lever being actuated.

11. The system of claim 10, further comprising a release lever linkage (406) configured to couple the release lever to the latch pin.

12. The system of claim 10, further comprising a deployment spring (602) positioned adjacent the lower end of the longitudinal restraint rod and configured to exert a force on the longitudinal restraint rod in a direction from the lower end to the upper end in order to cause the cargo restraint to move from the deployed position from the stowed position in response to the release lever being actuated.

13. The system of any of claims 7 to 12, further comprising a deployment guide pin (700) coupled to the support structure, wherein the cargo restraint further includes a deployment guide (400) configured to receive the deployment guide pin, the deployment guide having an angle about a longitudinal axis of the longitudinal restraint rod such that in response to the cargo restraint changing positions from the deployed position to the stowed position, the cargo restraint rotates about the longitudinal axis an amount of the angle based on the deployment guide and the deployment guide pin.

14. The system of any of claims 7 to 13, wherein the cargo restraint further includes a tie off clevis (802) positioned proximate to the upper end of the longitudinal restraint rod.

15. The system of any of claims 7 to 14, wherein the vertical restraint surface is configured to be received by a notch (110) in the cargo.
